# FASCICULE DE BREVET EUROPEEN

(11) **EP 3 642 113 B1**
(45) Date de publication et mention de la délivrance du brevet: **11.10.2023**
(21) Numéro de dépôt: 18748988.5
(22) Date de dépôt: 21.06.2018
(51) Int. Cl.: B64D 33/02, B64D 29/00, F02C 7/045

(54) **DISPOSITIF DE TRAITEMENT ACOUSTIQUE POUR NACELLE DE TURBORÉACTEUR D'AÉRONEF**
VORRICHTUNG ZUR AKUSTISCHEN BEHANDLUNG EINER TRIEBWERKSGONDEL EINES FLUGZEUGES
ACOUSTIC TREATMENT DEVICE FOR AIRCRAFT TURBOJET ENGINE NACELLE

(30) Priorité: 23.06.2017 FR 1755772
(43) Date de publication de la demande: 29.04.2020
(73) Titulaire: Safran Nacelles, 76700 Gonfreville-l'Orcher (FR)
(72) Inventeur: CAZUC, Xavier, 76700 Gonfreville L'Orcher (FR); DEHEZ, Meril, 76700 Gonfreville L'Orcher (FR); HAMEL, Laure, 76700 Gonfreville L'Orcher (FR); THISSE, Eric, 76700 Gonfreville L'Orcher (FR)
(74) Mandataire: Germain Maureau
(86) Numéro de dépôt international: PCT/FR2018/051511
(87) Numéro de publication internationale: WO 2018/234710

(56) Documents cités:
- EP-A2- 1 880 941
- FR-A1- 2 975 735
- FR-A1- 2 980 902
- US-A1- 2010 236 862
- US-A1- 2010 290 892

## Description

La présente invention se rapporte au domaine du traitement acoustique de nacelle de turboréacteur d'aéronef. Elle concerne plus spécifiquement une virole interne d'entrée d'air d'une telle nacelle, équipée d'un dispositif de traitement acoustique.

La réduction du bruit dans une nacelle de turboréacteur d'aéronef est généralement réalisée par surmoulage de panneaux acoustiques sur différentes pièces de la nacelle, notamment sur la virole interne de l'entrée d'air.

On connaît dans l'état de la technique antérieure des dispositifs de traitement acoustique sous la forme de pièces d'extension - parfois appelées « deep liner » en anglais.

Comme le montrent les documents US 2010/0236862 A1 et US 2010/0290892 A1, un dispositif de traitement acoustique de type pièce d'extension peut consister en une couronne annulaire dotée d'une structure d'absorption acoustique. Une telle couronne annulaire est typiquement surmoulée sur une peau de virole interne d'entrée d'air.

Pour une nacelle de turboréacteur d'aéronef comprenant une entrée d'air assemblée à une section médiane recevant une soufflante, les performances acoustiques peuvent être améliorées en rapprochant de la section médiane le ou les dispositifs de traitement acoustique montés sur l'entrée d'air. Or ce rapprochement est limité en raison de la présence d'une bride, dite « bride A1 », sur la virole interne de l'entrée d'air, la bride A1 permettant de fixer l'entrée d'air à la section médiane.

Du document FR 2 980 902 A1 il est connu de prévoir un panneau d'atténuation acoustique comprenant une peau résistive présentant des trous acoustiques, une peau pleine, une structure acoustique comprenant un matériau d'absorption acoustique et disposée entre la peau résistive et la peau pleine, et où la peau pleine est structurale et est configurée pour former au moins une entretoise transversale entre la peau pleine et la peau résistive du panneau d'atténuation acoustique.

Un but de la présente invention est de surmonter les inconvénients précités en proposant un dispositif de traitement acoustique apte à être fixé à la virole interne d'une entrée d'air de nacelle de turboréacteur d'aéronef de manière à assurer un traitement acoustique localisé à proximité de la bride A1.

A cet effet, l'invention se rapporte à une virole interne d'entrée d'air de nacelle de turboréacteur d'aéronef, selon la revendication 1 annexée, la virole comprenant un dispositif de traitement acoustique.

Ce dispositif forme une couronne annulaire agencée pour être montée sur un pourtour extérieur de la virole interne de manière à absorber de l'énergie acoustique en provenance de la virole interne ou d'une pièce reliée à la virole interne, par exemple en provenance de la section médiane ou de la soufflante. Ce dispositif est caractérisé en ce que la couronne annulaire comprend plusieurs tronçons, chaque tronçon comprenant une structure d'absorption acoustique, une peau externe fixée sur une surface externe de la structure d'absorption acoustique, et deux peaux latérales enserrant la structure d'absorption acoustique, en ce qu'il comprend en outre des moyens de fixation du type rivets, en ce que chacune des peaux latérales comprend une patte de fixation, chaque patte de fixation recevant une partie des moyens de fixation, et en ce que le dispositif est agencé pour être fixé à la virole interne par ces moyens de fixation.

Un tel dispositif de traitement acoustique évite à la fois les inconvénients du surmoulage et du collage. Par rapport à une fixation par collage, le rivetage permet de réduire les dimensions des pattes de fixation et donc de rapprocher davantage le dispositif de traitement acoustique de la bride A1. Par rapport à une fixation par surmoulage, le rivetage simplifie la fabrication et améliore la robustesse du dispositif. En effet, le surmoulage nécessite des opérations de cuisson qui ne garantissent pas une fixation satisfaisante et sont susceptibles de dégrader les performances mécaniques et/ou acoustiques du dispositif.

Plus généralement, la fixation par rivetage est particulièrement simple à mettre en oeuvre, facilite les opérations de maintenance et permet d'ajuster aisément les efforts de fixation aux contraintes mécaniques effectives par détermination d'un nombre de rivets et/ou d'un pas entre les rivets.

De préférence, la structure d'absorption acoustique peut être une structure alvéolaire du type nid d'abeille, par exemple en Nomex^{®} 32kg/m³ comprenant des cellules de dimension 3/8". Alternativement, la structure d'absorption acoustique peut être une structure comprenant des cavités creuses délimitées par des cloisons transverses intégrées, par exemple en thermoplastique. Un avantage des cloisons est que celles-ci peuvent être intégrées directement au dispositif par moulage.

Les moyens de fixation peuvent être des rivets du type « NAS1919M04 » commercialisés sous la marque UNIMATIC^{®}.

Dans un mode de réalisation, la couronne annulaire peut comprendre six tronçons, par exemple de longueur identique. La couronne étant annulaire, la longueur d'un tronçon correspond dans cet exemple à une dimension curviligne.

La réalisation du dispositif de traitement acoustique en tronçons favorise sa déformation eu égard aux sollicitations mécaniques produites par le fonctionnement de la nacelle. Ainsi, par rapport à un dispositif de traitement acoustique comprenant un unique tronçon, le dispositif de traitement acoustique selon l'invention est plus souple et plus robuste.

En effet, il est généralement préférable de traiter acoustiquement la virole interne sur l'intégralité de sa circonférence.

De préférence, les tronçons peuvent être reliés les uns aux autres par des éclisses.

En particulier, une éclisse - de préférence chacune des éclisses - peut relier un premier tronçon et un deuxième tronçon et être fixée, de préférence par rivetage :
- à la virole interne, et/ou
- à la peau externe du premier tronçon, et/ou
- à la peau externe du deuxième tronçon, et/ou
- aux peaux latérales du premier tronçon, et/ou
- aux peaux latérales du deuxième tronçon.

Dans un mode de réalisation, la peau externe peut être fixée à la structure d'absorption acoustique par collage.

De préférence, les peaux latérales peuvent ne pas être fixées à la structure d'absorption acoustique. En effet, l'absence de fixation, en particulier par collage, des peaux latérales avec la structure d'absorption acoustique augmente la souplesse du dispositif et diminue la masse totale de la nacelle grâce à l'absence de colle entre les peaux latérales et la structure d'absorption acoustique.

La virole interne de l'entrée d'air consiste typiquement en un panneau acoustique doté d'une structure d'absorption acoustique, typiquement une structure alvéolaire du type nid d'abeille, d'une peau interne perméable à l'air et d'une peau externe imperméable à l'air.

Dans le cadre de la présente invention, la couronne annulaire formant le dispositif de traitement acoustique selon l'invention est montée sur un pourtour extérieur de la virole interne. La peau externe de la virole interne peut être perméable à l'air au niveau dudit pourtour extérieur de manière à faire communiquer la structure d'absorption acoustique de la virole interne avec la structure d'absorption acoustique du dispositif de traitement acoustique selon l'invention. Pour ce faire, la peau externe de la virole interne peut comprendre des orifices au niveau dudit pourtour extérieur. De cette manière, la structure d'absorption acoustique du dispositif de traitement acoustique selon l'invention peut absorber de l'énergie acoustique en provenance de la virole interne ou d'une pièce reliée à la virole interne.

D'autres caractéristiques et avantages de l'invention apparaîtront à la lecture de la description nullement limitative qui suit et des figures annexées, dans lesquelles :
- La figure 1 est une vue en perspective d'une nacelle de turboréacteur d'aéronef ;
- La figure 2 est une vue en perspective éclatée d'une entrée d'air de nacelle de turboréacteur d'aéronef ;
- La figure 3 est une vue en perspective d'une virole interne d'entrée d'air de nacelle de turboréacteur d'aéronef comprenant un dispositif de traitement acoustique selon l'invention ;
- La figure 4 est une vue de face d'une virole interne d'entrée d'air de nacelle de turboréacteur d'aéronef comprenant un dispositif de traitement acoustique selon l'invention ;
- La figure 5 est une vue en coupe longitudinale d'une virole interne d'entrée d'air de nacelle de turboréacteur d'aéronef comprenant un dispositif de traitement acoustique selon l'invention ;
- La figure 6 est une vue en perspective d'un tronçon d'un dispositif de traitement acoustique selon l'invention ;
- La figure 7 est une vue en perspective d'une éclisse d'un dispositif de traitement acoustique selon l'invention ;
- La figure 8 est une vue partielle d'une structure d'absorption acoustique d'un dispositif de traitement acoustique selon un premier mode de réalisation ;
- La figure 9 est une vue partielle d'une structure d'absorption acoustique d'un dispositif de traitement acoustique selon un deuxième mode de réalisation ;
- La figure 10 est une vue schématique d'une peau latérale d'un dispositif de traitement acoustique selon l'invention.

Les éléments identiques ou similaires sont repérés par des signes de référence identiques sur l'ensemble des figures.

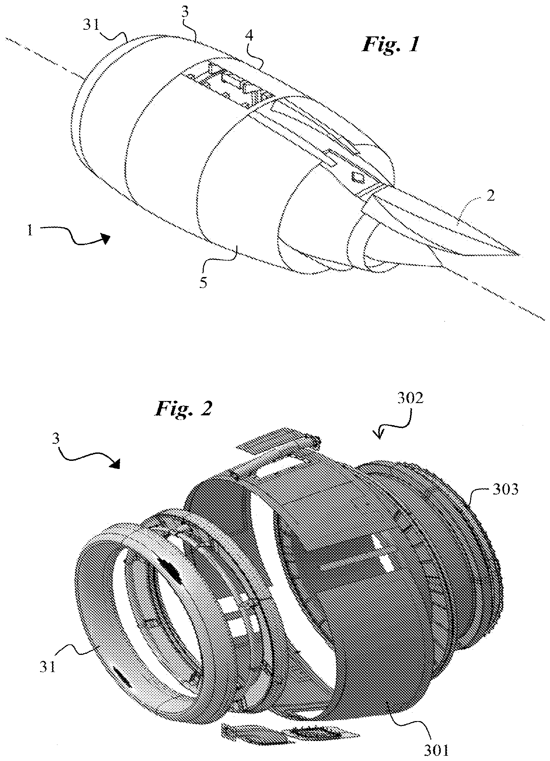

La figure 1 montre une nacelle 1 de turboréacteur (non représenté) à double flux d'aéronef (non représenté). Cette nacelle 1 est suspendue à un pylône 2 destiné à être fixé à une aile (non représentée) de l'aéronef (non représenté). La nacelle 1 comprend une entrée d'air 3 dotée d'une lèvre 31 adaptée pour permettre la captation optimale vers le turboréacteur (non représenté) de l'air nécessaire à l'alimentation d'une soufflante (non représentée) et de compresseurs internes (non représentés) du turboréacteur (non représenté). Cette nacelle 1 comprend aussi une section médiane 4 recevant la soufflante (non représentée) ainsi qu'une section aval 5.

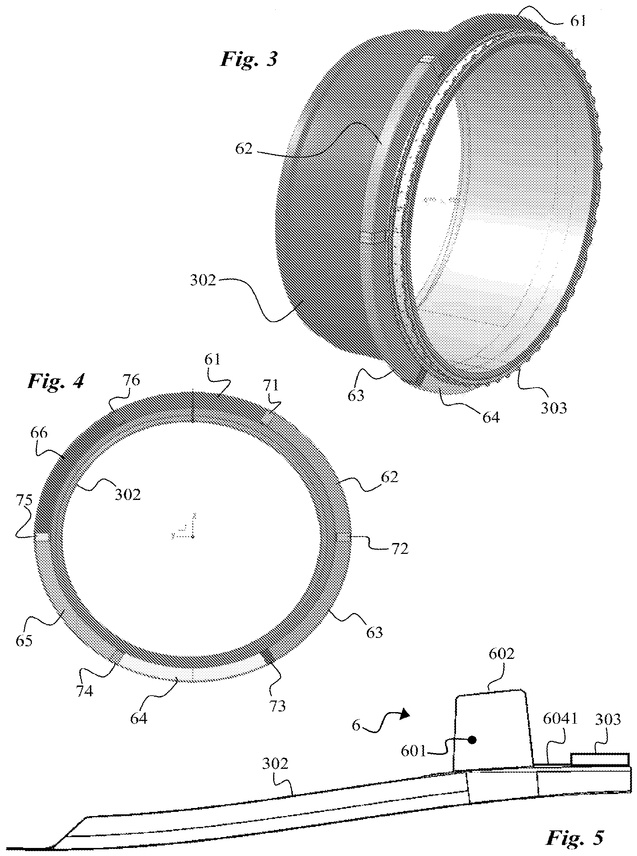

La figure 2 montre une entrée d'air 3 comprenant une virole externe 301 et une virole interne 302. Les figures 3 et 4 montrent une virole interne 302 isolément. La virole interne 302 comprend une bride de fixation 303 agencée pour être reliée à une bride (non représentée) correspondante de la section médiane 4 de la nacelle 1. Dans le présent document, la bride de fixation 303 est aussi appelée « bride A1 ».

Dans le présent document, les expressions « interne » et « externe » sont définies radialement. Ainsi par exemple, la virole interne est dite interne car elle est située radialement en amont de la virole externe, et réciproquement la virole externe est dite externe car elle est située radialement en aval de la virole interne.

En référence aux figures 2 à 5, la virole interne 302 comprend un dispositif de traitement acoustique 6. Dans cet exemple, le dispositif de traitement acoustique 6 comprend six tronçons 61-66. Dans un exemple ne faisant pas partie de l'objet revendiqué, le dispositif de traitement acoustique 6 peut comprendre un unique tronçon.

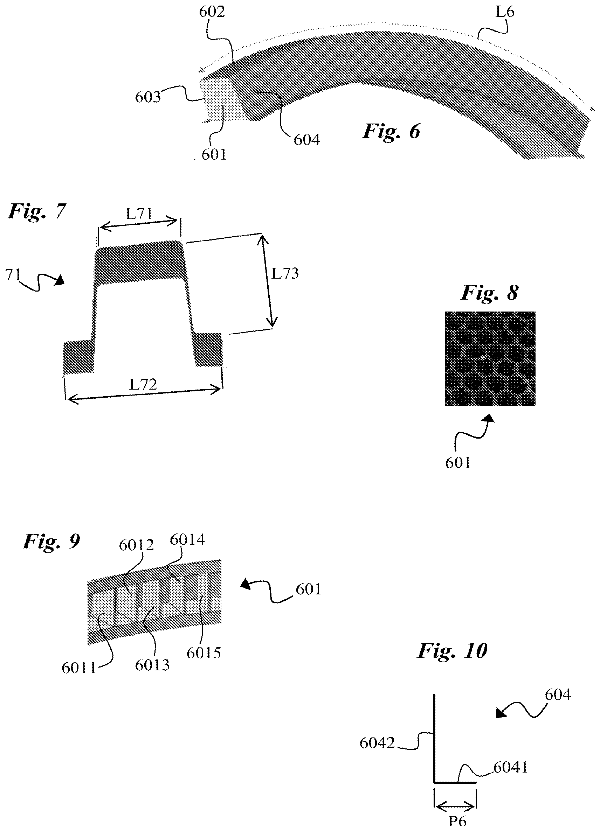

En référence aux figures 5 et 6, chacun des tronçons 61-66 du dispositif de traitement acoustique 6 comprend une structure d'absorption acoustique 601, une peau externe 602 fixée sur une surface externe de la structure d'absorption acoustique 601, et deux peaux latérales 603 et 604 enserrant la structure d'absorption acoustique 601.

Dans l'exemple de la figure 8, la structure d'absorption acoustique 601 est une structure alvéolaire du type nid d'abeille, par exemple en Nomex^{®} 32kg/m³ comprenant des cellules de dimension 3/8". Dans l'exemple de la figure 9, la structure d'absorption acoustique 601 est une structure comprenant des cavités creuses délimitées par des cloisons transverses 6011-6015. Les cloisons peuvent être réalisées en matière thermoplastique ou comprendre tout autre matériau adapté.

On voit notamment à la figure 4 que le dispositif de traitement acoustique 6 forme une couronne annulaire montée sur un pourtour extérieur de la virole interne 302. Lorsque la virole interne 302 ainsi équipée du dispositif de traitement acoustique 6 est intégrée à une nacelle 1, le dispositif de traitement acoustique 6 peut absorber de l'énergie acoustique en provenance de la virole interne 302 ou notamment de la section médiane 4 qui contient la soufflante (non représentée).

Dans cet exemple, les six tronçons 61-66 de la couronne annulaire 6 ont une longueur L6 identique (voir figure 6). Par exemple, pour une virole interne de diamètre extérieur de 1400 mm, la longueur L6 peut être comprise entre 700 et 800 mm, par exemple égale à 750 mm. Dans un autre mode de réalisation, la longueur des tronçons peut différer d'un tronçon à l'autre.

Comme le montre l'exemple de la figure 4, les tronçons 61-66 sont reliés les uns aux autres par des éclisses 71-76. Chacune de ces éclisses relie deux tronçons contigus et peut être fixée par rivetage à la fois à la virole interne 302, et/ou à la peau externe 602 de l'un desdits deux tronçons contigus ou de ces deux tronçons, et/ou à l'une ou aux deux peaux latérales 603-604 de l'un desdits deux tronçons contigus ou de ces deux tronçons. De préférence, chaque éclisse est fixée à la fois à la virole interne 302, à la peau externe 602 des deux tronçons contigus qu'elle relie et aux peaux latérales 603 et 604 de ces deux tronçons contigus.

La figure 7 montre une éclisse 71. A titre d'exemple, l'éclisse 71 peut avoir les dimensions suivantes :
- une largeur L71 comprise entre 35 et 65 mm, par exemple égale à 50 mm, la largeur L71 correspondant sensiblement à la largeur du dispositif de traitement acoustique à un sommet de ce dispositif (au niveau de la peau externe 602) incluant la largeur de la structure d'absorption acoustique 601 et l'épaisseur des deux peaux latérales 603 et 604 ;
- une largeur totale L72 comprise entre 70 et 150 mm, de préférence comprise entre 100 et 120 mm, par exemple égale à 110 mm, la largeur totale L72 correspondant sensiblement à la largeur du dispositif de traitement acoustique à une base de ce dispositif (au niveau des pattes de fixation, voir ci-dessous), correspondant sensiblement à la distance entre les extrémités des pattes de fixation (voir ci-dessous) ;
- une hauteur L73 comprise entre 30 et 100 mm, de préférence comprise entre 65 et 75 mm, par exemple égale à 70 mm, la hauteur L73 correspondant sensiblement à la hauteur du dispositif de traitement acoustique incluant la hauteur de la structure d'absorption acoustique 601 et l'épaisseur de la peau externe 602.

Dans un mode de réalisation, les peaux latérales 603 et 604 ne sont pas fixées à la structure d'absorption acoustique 601. Autrement dit, les peaux latérales 603 et 604 peuvent être apposées contre la structure d'absorption acoustique 601 et maintenues ainsi grâce à leur géométrie de ces peaux, décrite dans ce qui suit.

Chaque peau latérale, par exemple la peau latérale 604 montrée en figure 10, comprend une patte de fixation 6041 et une paroi latérale 6042. De préférence, la patte de fixation 6041 et la paroi latérale 6042 peuvent présenter un angle proche de 90°, par exemple compris entre π/3 et 2π/3, tel qu'illustré dans l'exemple de la figure 5, afin d'adapter la géométrie du dispositif de traitement acoustique 6 à l'espace disponible dans l'entrée d'air 3. Cet angle devrait toutefois légèrement différer de 90° afin de constituer un angle de dépouille.

La patte de fixation 6041 peut avoir une largeur P6 correspondant sensiblement à la moitié de la différence entre la largeur totale L72 décrite ci-dessus et la largeur L71 de l'éclisse 71. Dans les exemples dimensionnels décrits dans le présent document, le terme « sensiblement » peut être compris comme indiquant une tolérance dimensionnelle typiquement de quelques millimètres, ou de l'ordre de grandeur de l'épaisseur d'une peau ou de l'éclisse 71.

Afin de fixer le dispositif de traitement acoustique 6 à la virole interne 302, le dispositif de traitement acoustique 6 comprend des moyens de fixation (non représentés) du type rivets tels que des rivets « NAS1919M04 » (UNIMATIC^{®}).

Pour ce faire, lorsque les moyens de fixation (non représentés) sont des rivets, ceux-ci peuvent être reçus par les pattes de fixation 6041, au travers d'orifices réalisés dans les pattes de fixation 6041.

De préférence, les rivets (non représentés) sont fixés dans une peau cocuite (non représentée) de la virole interne 302 afin de limiter les perturbations acoustiques. Alternativement, les moyens de fixation (non représentés) peuvent être fixés de manière à traverser la virole interne 302 de part en part.

La largeur P6 des pattes de fixation 604 (figure 10) détermine la distance minimale à laquelle peut être placée la structure d'absorption acoustique 6 par rapport à la bride 303 comme cela ressort de la figure 5.

En raison de la proximité du dispositif de traitement acoustique 6 et de la bride A1, la fixation de l'entrée d'air 3 sur la section médiane 4 devrait être réalisée avant installation du dispositif de traitement acoustique 6 sur la virole interne 302.

Bien entendu, l'invention n'est pas limitée aux exemples qui viennent d'être décrits et de nombreux aménagements peuvent être apportés à ces exemples sans sortir du cadre de l'invention. Par exemple, le dispositif de traitement acoustique 6 peut comprendre un nombre choisi de tronçons de manière à optimiser le rapport entre, d'une part, coût de fabrication des tronçons et d'assemblage du dispositif 6 sur la virole interne 302 et, d'autre part, souplesse du dispositif 6.

## Revendications

1. Virole interne (302) d'entrée d'air (3) de nacelle de turboréacteur d'aéronef, la virole (302) comprenant un dispositif de traitement acoustique (6), ce dispositif (6) formant une couronne annulaire agencée pour être montée sur un pourtour extérieur de la virole interne (302) de manière à absorber de l'énergie acoustique en provenance de la virole interne (302) ou d'une pièce (4) reliée à la virole interne (302), **caractérisé en ce que** la couronne annulaire comprend plusieurs tronçons (61-66), chaque tronçon comprenant une structure d'absorption acoustique (601), une peau externe (602) fixée sur une surface externe de la structure d'absorption acoustique (601) et deux peaux latérales (603, 604) enserrant la structure d'absorption acoustique (601), **en ce qu'**il comprend en outre des moyens de fixation du type rivets, **en ce que** chacune des peaux latérales (603, 604) comprend une patte de fixation (6041), chaque patte de fixation (6041) recevant une partie des moyens de fixation, et **en ce que** le dispositif (6) est agencé pour être fixé à la virole interne (302) par les moyens de fixation.

2. Virole interne (302) selon la revendication 1, dans lequel les tronçons (61-66) sont reliés les uns aux autres par des éclisses (71-76).

3. Virole interne (302) selon la revendication 1 ou 2, dans lequel la couronne annulaire comprend six tronçons (61-66).

4. Virole interne (302) selon l'une quelconque des revendications 1 à 3, dans lequel les peaux latérales (603, 604) ne sont pas fixées à la structure d'absorption acoustique (601).

5. Virole interne (302) selon l'une quelconque des revendications 1 à 4, cette virole interne (302) consistant en un panneau acoustique doté d'une structure d'absorption acoustique.

## Patentansprüche

1. Innenmantel (302) eines Lufteinlasses (3) einer Turbotriebwerksgondel eines Flugzeugs, wobei der Mantel (302) eine akustische Behandlungsvorrichtung (6) umfasst, wobei diese Vorrichtung (6) einen ringförmigen Kranz bildet, der angeordnet ist, um auf einem Außenumfang des Innenmantels (302) derart montiert zu werden, um akustische Energie von dem Innenmantel (302) oder von einem Teil (4), das mit dem Innenmantel (302) verbunden ist, zu absorbieren, **dadurch gekennzeichnet, dass** der ringförmige Kranz mehrere Abschnitte (61-66) umfasst, wobei jeder Abschnitt eine akustische Absorptionsstruktur (601), eine Außenhaut (602), die an einer Außenoberfläche der akustischen Absorptionsstruktur (601) befestigt ist, und zwei Seitenhäute (603, 604) umfasst, die die akustische Absorptionsstruktur (601) einschließen, dadurch, dass sie weiter Befestigungsmittel in der Art von Nieten umfasst, dadurch, dass jede der Seitenhäute (603, 604) eine Befestigungslasche (6041) umfasst, jede Befestigungslasche (6041) einen Teil der Befestigungsmittel aufnimmt, und dadurch, dass die Vorrichtung (6) angeordnet ist, um durch die Befestigungsmittel an dem Innenmantel (302) befestigt zu werden.

2. Innenmantel (302) nach Anspruch 1, wobei die Abschnitte (61-66) durch Splinte (71-76) miteinander verbunden sind.

3. Innenmantel (302) nach Anspruch 1 oder 2, wobei der ringförmige Kranz sechs Abschnitte (61-66) umfasst.

4. Innenmantel (302) nach einem der Ansprüche 1 bis 3, wobei die Seitenhäute (603, 604) nicht an der akustischen Absorptionsstruktur (601) befestigt sind.

5. Innenmantel (302) nach einem der Ansprüche 1 bis 4, wobei dieser Innenmantel (302) aus einer Akustikplatte besteht, die mit einer akustischen Absorptionsstruktur ausgestattet ist.

## Claims

1. An inner shroud (302) of an air inlet (3) of an aircraft turbojet engine nacelle, the shroud (302) comprising an acoustic treatment device (6), this device (6) forming an annular crown arranged so as to be mounted on an external periphery of the inner shroud (302) so as to absorb the acoustic energy originating from the inner shroud (302) or a part (4) connected to the inner shroud (302), **characterized in that** the annular crown comprises several segments (61-66), each segment comprising an acoustic absorption structure (601), an outer skin (602) fastened to an outer surface of the acoustic absorption structure (601) and two lateral skins (603, 604) clasping the acoustic absorption structure (601), **in that** it further comprises rivet type fastening means, **in that** each of the lateral skins (603, 604) comprises a fastening foot (6041), each fastening foot (6041) receiving a portion of the fastening means, **in that** the device (6) is arranged so as to be fastened to the inner shroud (302) by the fastening means,

2. The inner shroud (302) according to claim 1, wherein the segments (61-66) are connected to each other by battens (71-76).

3. The inner shroud (302) according to claim 1 or 2, wherein the annular crown comprises six segments (61-66).

4. The inner shroud (302) according to any one of claims 1 to 3, wherein the lateral skins (603, 604) are not fastened to the acoustic absorption structure (601).

5. The inner shroud (302) according to any one of claims 1 to 4, this inner shroud (302) consisting of an acoustic panel provided with an acoustic absorption structure.
